# EUROPÄISCHE PATENTSCHRIFT

(11) **EP 1 509 711 B1**
(45) Veröffentlichungstag und Bekanntmachung des Hinweises auf die Patenterteilung: **19.04.2006**
(21) Anmeldenummer: 03732454.8
(22) Anmeldetag: 24.05.2003
(51) Int. Cl.: F16H 63/32

(54) **SCHALTSCHWINGE FUER DIE SCHALTUNG EINES GETRIEBES**
GEAR SHIFT FORK FOR SHIFTING A TRANSMISSION
FOURCHETTE DE BOITE DESTINEE A LA SELECTION D'UN RAPPORT

(30) Priorität: 31.05.2002 DE 10224308
(43) Veröffentlichungstag der Anmeldung: 02.03.2005
(73) Patentinhaber: ZF FRIEDRICHSHAFEN Aktiengesellschaft, 88038 Friedrichshafen (DE)
(72) Erfinder: BEER, Uwe, 14476 Fahrland (DE); DRABEK, Michael, 14778 Schenkenberg (DE)
(86) Internationale Anmeldenummer: PCT/EP2003/005437
(87) Internationale Veröffentlichungsnummer: WO 2003/102448

(56) Entgegenhaltungen:
- EP-A- 0 384 158
- WO-A-95/16869
- DE-A- 2 805 044
- DE-A- 19 843 584
- DE-A- 19 919 270

## Beschreibung

Die Erfindung betrifft eine Schaltschwinge für die Schaltung eines Getriebes nach dem Oberbegriff von Anspruch 1, wie aus der DE 19919270 A bekannt.

In Schaltungen eines Getriebes, insbesondere eines Fahrzeuggetriebes, werden je nach Anforderung neben Schaltgabeln auch Schaltschwingen verwendet. Dabei werden die Schaltschwingen im Getriebegehäuse auf Bolzen gelagert und führen eine axiale Bewegung einer von der Schaltschwinge betätigten Schiebemuffe in der Regel entgegengesetzt der Betätigungsrichtung der Schaltschwinge aus, weil die Bewegungsrichtung an der Lagerung umgekehrt wird.

Aus der EP 0 232 279 B1 ist der grundsätzliche Aufbau einer Schaltschwinge bekannt geworden, wobei in dieser Anordnung jedoch auch die Betätigungsrichtung der Schaltschwinge in der Bewegungsrichtung der Schiebemuffe erfolgt. Die im Getriebegehäuse gelagerte Schaltschwinge wird seitlich an nur einer Seite von einem Hebel betätigt, der in eine Schubstange eingreift und von dieser bewegt wird. Durch diese einseitige Betätigung liegt die Krafteinbringung in die Schaltschwinge nicht optimal in der Mitte der Schaltschwinge, wo sie zur Aufbringung einer gleichmäßigen Bewegung an den Eingriffstellen der Schiebemuffe erforderlich wäre. Dies kann zu einer Verkippung der Schaltschwinge an den Lagerstellen führen und die leichte Bewegbarkeit der Schiebemuffe hemmen.

Der Erfindung liegt die Aufgabe zugrunde, die Einleitung der betätigenden Kraft an der Schaltschwinge zu verbessern.

Die Aufgabe wird gelöst durch eine Schaltschwinge mit den Merkmalen des Anspruchs 1.

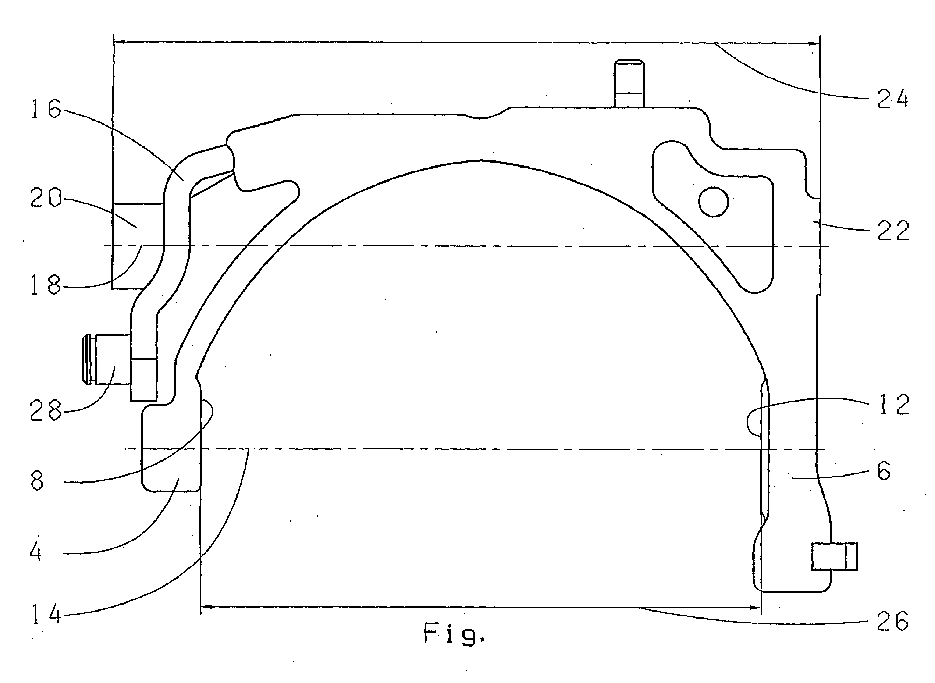

Erfindungsgemäß wird eine Schaltschwinge für ein Getriebe vorgeschlagen, die zwei Schenkel umfasst, zwischen denen eine Aufnahme für eine Schiebemuffe vorgesehen ist, und die zwei Lagerstellen aufweist, an denen die Schaltschwinge in einem Getriebegehäuse schwenkbar angeordnet ist. An der Schaltschwinge ist weiter ein Hebelarm angeordnet, über den eine Krafteinleitung in die Schaltschwinge erfolgt zur Verschwenkung der Schaltschwinge um die Lagerstellen und der Hebelarm dabei an der Schaltschwinge im Bereich zwischen den beiden Lagerstellen angeordnet ist. Dabei ist mit dem Begriff "Bereich zwischen" eine Betrachtung der Schaltschwinge gemäß der Zeichnung, also in Seitenansicht, zugrundegelegt. In einer vorteilhaften Ausgestaltung ist der Hebelarm an der Schaltschwinge im Bereich zwischen den beiden Schenkeln angeordnet. Eine weitere Ausgestaltung zeigt den Hebelarm in der Mitte zwischen den beiden Lagerstellen bzw. den beiden Schenkeln angeordnet. Besonders vorteilhaft wirkt sich eine Ausführungsform aus, bei der der Punkt für die Krafteinleitung in den Hebelarm außerhalb der beiden Lagerstellen bzw. außerhalb der beiden Schenkel angeordnet ist. Eine der Lagerstellen ist in einer weiteren Ausgestaltung an dem Hebelarm vorgesehen.

Durch die erfindungsgemäße Ausgestaltung der Schaltschwinge kann die Krafteinleitung auf die Schaltschwinge an jedem Punkt der Schaltschwinge erfolgen, wodurch eine konstruktive Vielfalt für die Anordnung der Schaltstangen und kraftübertragenden Hebel gewährleistet wird, wobei insbesondere eine seitliche Anordnung unterstützt wird, ohne die Gefahr eines Verklemmens der Schaltschwinge bzw. der Schiebemuffe in Kauf nehmen zu müssen.

Die Erfindung wird anhand einer Zeichnung näher erläutert.

Die Figur zeigt eine Schaltschwinge 2 für ein hier nicht gezeigtes Schaltgetriebe. Die Schaltschwinge 2 weist zwei Schenkel 4 und 6 auf, zwischen denen eine Aufnahme für eine hier nicht gezeigte Schiebemuffe angeordnet ist. Ein erster Teil 8 der Aufnahme befindet sich an dem Schenkel 4. Ein zweiter Teil 12 der Aufnahme ist am Schenkel 6 angeordnet. Durch beide Teile 8 und 12 verläuft eine gemeinsame Drehachse 14. Die Schaltschwinge 2 ist um eine Drehachse 18 drehbar in einer ersten Lagerstelle 20 und einer zweiten Lagerstelle 22 innerhalb des Getriebegehäuses gelagert. In der gezeigten Ausführungsform ist die erste Lagerstelle 20 an einem Hebelarm 16 angeordnet, an dem auch ein Bolzen 28 vorgesehen ist, der als ein Punkt der Krafteinleitung in die Schaltschwinge 2 wirkt zur Betätigung der Schaltschwinge 2. Bei der Betätigung der Schaltschwinge 2 wird die Schaltschwinge 2 auf der Drehachse 18 verdreht, wodurch eine Verschiebung der Drehachse 14 und damit eine Verschiebung der Schiebemuffe senkrecht zur Zeichnungsebene erfolgt. Bei dieser Verschiebung dreht sich die Schiebemuffe um die Drehachse 14 zwischen den Teilen 8 und 12 der Aufnahme. Der Hebelarm 16 ist an der Schaltschwinge 2 im Bereich 24 zwischen den beiden Lagerstellen 20 und 22 angeordnet. Dadurch kann eine über den Bolzen 28 und den Hebelarm 16 in die Schaltschwinge 2 eingebrachte Betätigungskraft von den Lagerstellen 20 und 22 gut im Gehäuse abgestützt werden, ohne dass ein Verkanten der Schaltschwinge 2 an den Lagerstellen 20 und 22 durch eine außerhalb der Lagerstellen 20 und 22 aufgebrachte Betätigungskraft zu befürchten ist. Die Anordnung des Hebelarmes 16 an der Schaltschwinge 2 liegt auch im Bereich 26 zwischen den beiden Schenkeln 4 und 6. Die hier gezeigte Lagerstelle 20 der Schaltschwinge 2 kann auch direkt am Schenkel 4 angeordnet sein.

### Bezugszeichen

- 2: Schaltschwinge
- 4: Schenkel
- 6: Schenkel
- 8: erster Teil der Aufnahme
- 12: zweiter Teil der Aufnahme
- 14: Drehachse
- 16: Hebelarm
- 18: Drehachse
- 20: Lagerstelle
- 22: Lagerstelle
- 24: Bereich
- 26: Bereich
- 28: Bolzen

## Patentansprüche

1. Schattschwinge (2) für ein Getriebe, die zwei Schenkel (4, 6) umfasst, zwischen denen eine Aufnahme für eine Schiebemuffe vorgesehen ist, und die zwei Lagerstellen (20,22) aufweist, an denen die Schaltschwinge (2) in einem Getriebegehäuse schwenkbar angeordnet ist, und an der ein Hebelarm (16) angeordnet ist, über den eine Krafteinleitung in die Schaltschwinge (2) erfolgt zur Verschwenkung der Schaltschwinge (2) um die Lagerstellen (20, 22) und der an der Schaltschwinge (2) im Bereich (24) zwischen den beiden Lagerstellen (20, 22) angeordnet ist, **dadurch gekennzeichnet, dass** eine der lagerstellen (20) an dem Hebelarm (16) vorgesehen ist.

2. Schaltschwinge (2) nach Anspruch 1, **dadurch gekennzeichnet, dass** ein Punkt (28) für die Krafteinleitung in den Hebelarm (16) außerhalb der beiden Lagerstellen (20, 22) angeordnet ist.

## Claims

1. Gear shift fork (2) for a transmission, comprising two legs (4, 6), between which is disposed a mount for a sliding sleeve, and having two bearing points (20, 22) on which the gear shift fork (2) is pivotably mounted in a transmission housing and on which a lever arm (16) is mounted, by means of which force is transmitted to the gear shift fork (2) in order to pivot the gear shift fork (2) about the bearing points (20, 22) and which is disposed on the gear shift fork (2) in the region (24) between the two bearing points (20, 22), **characterised in that** one of the bearing points (20) is disposed on the lever arm (16).

2. Gear shift fork (2) as claimed in claim 1, **characterised in that** a point (28) for transmitting force to the lever arm (16) is disposed outside of the two bearing points (20, 22).

## Revendications

1. Levier oscillant de commande (2) pour une boîte de vitesses, qui comprend deux branches (4, 6) entre lesquelles est prévu un logement pour un manchon coulissant, et qui comporte deux points d'appui (20, 22) au niveau desquels le levier oscillant (2) est monté oscillant dans un carter de boîte de vitesses, et auquel est attaché un bras de levier (16) par l'intermédiaire duquel s'effectue une application de force au levier oscillant (2) servant à faire pivoter le levier oscillant (2) autour des points d'appui (20, 22) et qui est disposé dans la région (24) du levier oscillant (2) entre les deux points d'appui (20, 22), **caractérisé en ce qu**'un des points d'appui (20) est prévu sur le bras de levier (16).

2. Levier oscillant (2) selon la revendication 1, **caractérisé en ce qu**'un point (28) pour l'application de la force est disposé dans le bras de levier (16) en dehors des deux points d'appui (20, 22).
